# EUROPÄISCHE PATENTSCHRIFT

(11) **EP 3 072 859 B1**
(45) Veröffentlichungstag und Bekanntmachung des Hinweises auf die Patenterteilung: **06.03.2019**
(21) Anmeldenummer: 15160654.8
(22) Anmeldetag: 24.03.2015
(51) Int. Cl.: C04B 26/14, C04B 14/02, C04B 14/10, C04B 14/12, C04B 14/14, C04B 14/16, C04B 14/18, C04B 14/20, C04B 14/22, C04B 14/24, C04B 40/02

(54) **BAUKÖRPER, INSBESONDERE BAUPLATTE, SOWIE VERFAHREN ZUR HERSTELLUNG EINES BAUKÖRPERS**
COMPONENT, IN PARTICULAR BUILDING PANEL, AND A METHOD FOR MANUFACTURING A COMPONENT
CORPS DE BÂTIMENT, NOTAMMENT PANNEAU DE CONSTRUCTION, AINSI QUE PROCÉDÉ DE FABRICATION D'UN TEL CORPS DE BÂTIMENT

(43) Veröffentlichungstag der Anmeldung: 28.09.2016
(73) Patentinhaber: DAW SE, 64372 Ober-Ramstadt (DE)
(72) Erfinder: Koscholke, Dieter, 31848 Bad Münder (DE); Lohmann, Thomas, 68526 Ladenburg (DE)
(74) Vertreter: Metten, Karl-Heinz

(56) Entgegenhaltungen:
- EP-A1- 2 826 798
- EP-A2- 0 290 881
- DE-A1- 10 107 145
- DE-A1-102008 011 627
- DE-A1-102010 023 708

## Beschreibung

Die vorliegende Erfindung betrifft einen Baukörper, insbesondere Bauplatte, beispielsweise eine Putzträgerplatte, sowie ein Verfahren zur Herstellung dieses Baukörpers.

Beim Hausbau für Wand-, Decken- und Bodenelemente zum Einsatz kommende Baukörper haben regelmäßig über eine hohe mechanische Festigkeit zu verfügen. Gleichzeitig soll ihr spezifisches Gewicht gering sein, um Transport und Verarbeitung möglichst einfach zu gestalten. Diese Anforderungen gelten insbesondere auch für sogenannte Putzträgerplatten, wie sie im Sockelbereich von Gebäudeaußenwänden, insbesondere für den Abschluss von Wärmedämmverbundsystemen, zum Einsatz kommen. Die Putzträgerplatten dienen hier zur Schaffung eines mechanisch stabilen Sockelbereichs, der zumindest teilweise mit einem Wärmedämmverbundsystem ausgestattet ist. Häufig werden solche Putzträgerplatten auch für die Verkleidung von Rolladenkästen eingesetzt. Mit Putzträgerplatten kann folglich häufig eine lückenlose Außenhaut einer Gebäudehülle gebildet werden. Diese Putzträgerplatten müssen sich dabei für die Anbringung einer Putzschicht eignen, die sich zudem in keiner Weise von der auf den benachbarten Untergründen aufgebrachten Putzschicht unterscheiden darf. Putzträgerplatten werden ebenfalls als hinterlüftete, vorgehängte Fassadenverkleidung eingesetzt, die auf einer Unterkonstruktion mit der Wand verbunden ist. Um für diesen Zweck geeignet zu sein, haben solche Putzträgerplatten nicht nur tragfähig zu sein, sondern darüber hinaus mit Hilfe von Schrauben oder Nieten an der Unterkonstruktion befestigbar zu sein.

Dem Wunsch, bei der Herstellung von Putzträgerplatten Material bzw. Kosten einzusparen, steht die Anforderung an eine etablierten Standards genügende hohe Festigkeit gegenüber. Derartige Baukörper haben zum Beispiel verschraubbar bzw. mit Hilfe von Dübeln an Wandflächen anbringbar zu sein.

Grundsätzlich kann für die Herstellung von Putzträgerplatten auf anorganische oder organische Bindemittel oder auf eine Kombination von anorganischen und organischen Bindemitteln zurückgegriffen werden. Anorganische Bindemittel werden regelmäßig eingesetzt, wenn es gilt, nichtbrennbare Putzträgerplatten zu erhalten. Derartige Putzträgerplatten erfordern im Allgemeinen große Mengen an Bindemitteln. Auch sind relativ hohe Schüttdichten und hochviskose Verarbeitungsmassen in Kauf zu nehmen. Dies bringt in der Regel hohe Verarbeitungskosten mit sich. Bei Verwendung organischer Bindemittel auf der Basis von Reaktionsharzen führt der hydrophobe Charakter dieser Reaktionsharze mitunter dazu, dass sich auf den Außenseiten eine wasserabweisende Schicht ausbildet. Um dennoch eine gute und dauerhafte Haftung mit einer angebrachten mineralischen Putzschicht zu erzielen, hat man die Oberfläche einer solchen Putzträgerplatte zuvor mit einem sogenannten Primer zu behandeln. Dies ist zeit-, arbeits- und kostenaufwändig.

Aus dem Stand der Technik sind zahlreiche Varianten von Leichtbauplatten bekannt.

Gemäß EP 290 881 A2 sollen sich Leichtbauplatten mit hoher mechanischer Festigkeit und geringer Dichte dadurch erhalten lassen, dass man 70 bis 95 Gewichtsteile an offenporigen Blähglaskugeln der Kornfraktion von 0,2 bis 20 mm und einer Rohdichte zwischen 0,2 und 0,55 g/cm³, 4 bis 30 Gewichtsteile eines geschäumten Epoxidbindemittels bestehend aus Bisphenolharz und einem Aminhärter und 0,5 bis 5 Gewichtsteile eines Polysiloxans vermischt und unter Wärmezufuhr reagieren lässt. Hierbei bildet das Bindemittel eine Schaumstruktur aus. Bei dieser Vorgehensweise wird durch die Reaktion von Polysiloxan und Amin-Härter Wasserstoff als Treibgas freigesetzt. Dies bringt erhöhte Sicherheitsanforderungen bei der Produktion mit sich.

Vielseitig einsetzbare platten- und profilförmige Bauelemente, die einfach und kostengünstig herstellbar sind, sollen sich gemäß der DE 10 2008 011 627 A1 dadurch erhalten lassen, dass man die folgenden Verfahrensschritte einhält: a) Einbringen eines Teils einer homogenen Mischung aus Blähglasgranulat und Bindemittel in eine Form, b) Ausbilden einer Schicht aus Polystyrol durch Auflegen einer Polystyrolplatte oder Aufbringen einer Schüttung aus Polystyrolkugeln auf der homogenen Mischung, c) Verteilen des restlichen Teils der homogenen Mischung auf der Polystyrolschicht und d) Verdichten durch Pressen und Aushärten zu einem platten- oder profilförmigen Bauelement bei gleichzeitiger Einwirkung von Wärme bei einer Temperatur größer oder gleich 90°C. Dies ist ein vielstufiger Prozess, bei dem unterschiedliche Technologien miteinander kombiniert werden müssen.

Aus der DE 10 2010 023 708 A1 geht ein Fertigbauteil für ein Gebäude hervor mit einer ersten Schicht aus einem Harzbindemittel und einem Blähmaterial und einer zweiten Schicht aus z.B. Leichtbeton, welche über das Bindemittel der ersten Schicht an dieser befestigt wird. Derartige Sandwichbauteile haben nur einen begrenzten Verwendungsumfang.

Die DE 10 2008 063 815 A1 betrifft offenporige Formkörper auf der Basis anorganischer Leichtgranulate mit hydrophober Oberfläche und einem organischen Bindemittel. Mit diesen offenporigen Formkörpern soll sich ein günstiges Brandschutzverhalten einstellen, auch sollen sie sich durch eine hohe Wasserdurchlässigkeit und gute Schallschutzeigenschaften bei gleichzeitig ansprechender Biegefestigkeit auszeichnen. Die für dieses Verfahren erforderlichen Ausgangsmaterialien sind nicht ohne weiteres zugänglich bzw. relativ kostenintensiv.

In der DE 10 2006 056 136 A1 werden Leichtbauformteile aus einem Verbundwerkstoff beschrieben, der auf einem Matrixmaterial ausgewählt aus der Gruppe bestehend aus Polyesterharzen, Epoxidharzen, Polymethacrylaten, Vinylesterharzen, Polyurethanen, Urethanmodifizierten Polyacrylaten und Silikonharzen und mindestens einem Leichtfüllstoffmaterial basiert. Mindestens ein Deckschichtbereich hat an der Oberfläche oder oberflächennah zwar das Matrixmaterial, nicht jedoch auch das Leichtfüllstoffmaterial aufzuweisen. Diese Leichtbauformteile, welche eine Sandwich-Struktur zeigen, sollen hochverschleißfeste, steife Strukturen mit einer ansprechenden Optik bereitstellen. Bei diesen Produkten ist mit Einbußen hinsichtlich mechanischer Festigkeit an der Oberfläche zu rechnen.

Maßhaltige Formkörper sollen gemäß der DE 20 2006 000 751 durch Verwendung von mindestens 50 Gewichtsprozent an Polyestern, Epoxiden, Polystyrol, Polyurethan und/oder Polyamid neben mineralischen Leichtzuschlagstoffen und nachwachsenden Rohstoffen erhältlich sein. Es ist häufig mit erheblichem Aufwand verbunden, nachwachsende Rohstoffe in eine Form zu bringen, die es gestattet, sie in Bauelemente einzuarbeiten.

Bauelemente, enthaltend geblähtes mineralisches Material, welche schwer entflammbar sind und ein leichtes Gewicht aufweisen, sollen sich gemäß der DE 37 15 487 dadurch erhalten lassen, dass man als Bindemittel ein flüssiges aushärtbares Kunstharz verwendet, mit dem die Oberfläche der Teilchen aus geblähtem Material zu benetzen ist. Ferner sind hierbei Wolle, vorzugsweise in Form von Kunststofffasern, in einem Mischer mit pulverförmigem, nicht ausgehärtetem Kunstharz und einem pulverförmigen Katalysator zu vermischen und erst anschließend mit den vom noch nicht ausgehärteten Kunstharz benetzten Teilchen aus geblähtem Material in Kontakt zu bringen.

Die aus dem Stand der Technik bekannten Leichtbauplatten sind noch stets mit Nachteilen behaftet. Es wäre daher wünschenswert, Leichtbauplatten zur Verfügung zu stellen, die frei von den geschilderten Nachteilen sind und die sich insbesondere kostengünstig herstellen lassen, ohne Einbußen bei den mechanischen Eigenschaften wie auch dem spezifischen Gewicht in Kauf nehmen zu müssen. Des Weiteren lag der Erfindung die Aufgabe zugrunde, ein Verfahren für die Herstellung von Leichtbauplatten zur Verfügung zu stellen, mit dem verlässlich und reproduzierbar hochwertige Leichtbauplatten auf kostengünstige Weise zugänglich sind. Außerdem lag der Erfindung die Aufgabe zugrunde, ein solches Verfahren für die Herstellung von Leichtbauplatten verfügbar zu machen, mit dem sich die für die jeweilige Anwendung gewünschten Eigenschaftsprofile gezielt einstellen lassen. Schließlich lag der Erfindung die Aufgabe zugrunde, Leichtbauplatten zur Verfügung zu stellen, die eine geringere Brandneigung aufweisen als die aus dem Stand der Technik bekannten Leichtbauplatten.

Demgemäß wurde ein Verfahren zur Herstellung eines Baukörpers, insbesondere einer Bauplatte, gefunden, umfassend die Schritte
a) Zurverfügungstellung mindestens eines Epoxidharzes, insbesondere Bisphenol A und/oder Bisphenol F, und/oder der das Epoxidharz bildenden Komponenten, und/oder
   Zurverfügungstellung mindestens eines Reaktivverdünners,
b) Zurverfügungstellung mindestens eines Epoxidharz-Härters,
c) Zurverfügungstellung mindestens eines porösen partikulären anorganischen Füllstoffmaterials,
f) Vermischen von
   Epoxidharz und/oder Reaktivverdünner und
   Epoxidharz-Härter und porösem partikulären anorganischen Füllstoffmaterial in der Weise, dass das Epoxidharz und/oder der Reaktivverdünner nicht oder nicht vollständig ausgehärtet werden,
i) Einbringen der in Schritt f) erhaltenen Mischung in ein Formbehältnis,
k) Beaufschlagen der in dem Formbehältnis vorliegenden Mischung mit Wärme und Pressdruck,
   wobei der Pressdruck derart eingestellt wird, dass mindestens ein Teil des porösen partikulären anorganischen Füllstoffmaterials in dem Formbehältnis in Bruchstücke zerkleinert wird und wobei diese Zerkleinerung stattfindet, bevor und/oder während das Epoxidharz und/oder der Reaktivverdünner durch Einwirkung des Epoxidharz-Härters und gegebenenfalls durch Einwirkung von Wärme aushärtet, und
l) Entnehmen des Baukörpers aus dem Formbehältnis.

Die alphabetische Buchstabenabfolge der vorliegend beschriebenen Verfahrensschritte gibt in einer bevorzugten Ausgestaltung auch die Reihenfolge der Verfahrensschritte vor; dies gilt insbesondere für die Verfahrensschritte f) bis l). Die Reihenfolge der Schritte a) bis c) bis a) bis e) kann hingegen regelmäßig frei gewählt werden.

Bevorzugt werden mit dem Verfahren als Baukörper Leichtbaukörper bzw. Leichtbauplatten, beispielsweise Putzträgerplatten, hergestellt. Selbstverständlich können mit dem Verfahren ohne weiteres auch Bauprofile erhalten werden. Je nach Anwendungsbereich ist ein hierauf abgestimmtes Formbehältnis zu verwenden. Die Baukörper können dabei als Wand-, Decken- oder Fußbodenbauteile eingesetzt werden. Üblicherweise beim Bau zum Einsatz kommende Platten verfügen über das Maß 1200 x 800 mm. Will man die Anzahl der Platten, die an einer Fassade anzubringen sind, minimieren, kann man auch auf Platten der Größe 2400 x 1200 mm zurückgreifen. Die Dicke üblicher Bauplatten, insbesondere Putzträgerplatten, beträgt im Allgemeinen 8 bis 20 mm.

Grundsätzlich kann auf dem Fachmann bekannte Epoxidharze zurückgegriffen werden, um zu den mit dem erfindungsgemäßen Verfahren erhältlichen Baukörpern zu gelangen.

Im Sinne der Erfindung soll der Begriff "Epoxidharz" ein Epoxidgruppen enthaltendes Reaktionsharz bedeuten. Ein solches Reaktionsharz stellt ein flüssiges oder verflüssigbares Harz, das mit Reaktionsmitteln wie Härter, Beschleuniger und dergleichen ohne Abspaltung flüchtiger Verbindungen durch Polyaddition härtet, dar. Bevorzugt sind Epoxidharze, die gebildet sind aus den Komponenten Bisphenol, insbesondere Bisphenol A und/oder Bisphenol F, und mindestens einer Epoxidverbindung, insbesondere Epichlorhydrin. Besonders bevorzugt wird hierbei auf ein Gemisch aus Bisphenol A und Bisphenol F zurückgegriffen. Selbstverständlich können auch weitere Bisphenole entweder einzeln oder im Gemisch, insbesondere mit Bisphenol A und/oder Bisphenol F, eingesetzt werden. Geeignete Bisphenole umfassen hierbei unter anderem Bisphenol AF, Bisphenol B, Bisphenol C und Bisphenol E. In einer besonders zweckmäßigen Ausführungsform stellt das Epoxidharz ein Diglycidylether von Bisphenol A oder von Bisphenol F oder einem Gemisch davon dar.

Sind das Epoxidharz und/oder der Reaktivverdünner mit dem Epoxidharz-Härter ausgehärtet worden, spricht man bei dem erhaltenen Produkt von einem ausgehärteten Epoxidharz.

Für geeignete Epoxidharz-Härter greift man z.B. auf Amin-Härter, insbesondere ausgewählt aus der Gruppe bestehend aus Diaminen, Triaminen, Tetraaminen, aliphatischen Polyaminen und aromatischen Polyaminen oder deren beliebigen Mischungen, z.B. Aminoethylpiperazin (AEP), 1,3-Benzoldimethanamin (MXDA) und/oder Isophorondiamin (IPDA), und/oder mindestens zurück. Unter den Amin-Härtern kommen auch Amin-Addukte, Polyamin-Addukte, Polyoxyalkylendiamin, Polyamidoamin, Mannich-Basen, hergestellt durch Kondensation von einem Phenol, einem Amin und Formaldehyd, und transaminierte Mannich-Basen in Betracht. Auch können saure Härter, insbesondere Dicarbonsäureanhydride, z.B. Hexahydrophthalsäureanhydrid, eingesetzt werden.

Zur Erhärtung flüssiger Epoxidharze und/oder Reaktivverdünner kann man demgemäß auch auf flüssige aliphatische Polyamine und/ oder Polyamidoamine zurückgreifen. Diese sind insbesondere für die Härtung bei Raumtemperatur, die sogenannte Kalthärtung geeignet. Für die sogenannte Warmhärtung, die regelmäßig bei Temperaturen oberhalb von 80°C durchgeführt wird, greift man bevorzugt auf aromatische Amine oder auf die sauren Härter, beispielsweise Anhydride der Phthalsäure zurück.

Die geschilderten Epoxidharz-Härter können in gleicher Weise zur Aushärtung von Reaktivverdünnern bzw. von Gemischen aus Epoxidharz und Reaktivverdünner eingesetzt werden. Mit den Epoxidharz-Härtern lassen sich die Verarbeitungseigenschaften des auszuhärtenden bzw. aushärtenden Epoxidharzes steuern, z.B. die Verarbeitungs- und Aushärtungszeit einstellen.

Neben dem für das Verfahren zur Verfügung gestellten Epoxidharz, oder auch alternativ, kann mindestens ein sogenannter Reaktivverdünner zu- bzw. eingesetzt werden. Mit diesem Reaktivverdünner kann die Viskosität von Epoxidharzen, beispielsweise auf Basis von Bisphenolen, verringert werden. Reaktivverdünner dienen hauptsächlich dazu, die Verarbeitungsviskosität, Topfzeit und/oder die Benetzung von Füllstoffen zu manipulieren. "Reaktivverdünner" im Sinne der Erfindung stellen demgemäß in einer Ausgestaltung des Verfallrens viskositätssenkende Stoffe dar, die bei der Härtung des Reaktionsharzes chemisch in das Harz eingebaut werden. Reaktivverdünner für Epoxidharze sind somit Epoxidgruppen enthaltende Verbindungen niedriger Viskosität. Geeignete Reaktivverdünner umfassen daher im Allgemeinen molekulare flüssige epoxyfunktionelle Verbindungen in Form von mono- und Diglycidylethern.

Bei einem Zweikomponentensystem aus Epoxidharz und Epoxidharz-Härter sollte der Reaktivverdünner vorzugsweise nicht in der Härterkomponente vorliegen, sondern vorzugsweise nur in der Harzkomponente.

Als Reaktivverdünner finden z.B. Verwendung Glycidylether von aliphatischen, alicyclischen oder aromatischen Mono- oder insbesondere Polyalkoholen Verwendung, wie Monogylcidylether, z.B. o-Kresylglycidylether, und/oder insbesondere Glycidylether mit einer Epoxid-Funktionalität von mindestens 2, wie 1,4-Butandioldiglycidylether, Cyclohexandimethanoldiglycidylether, Hexandioldiglycidylether und/oder insbesondere Tri- oder höhere Glycidylether, z.B. Glycerintriglycidylether, Pentaerythrittetraglycidylether oder Trimethylolpropantriglycidylether, oder ferner Mischungen von zwei oder mehr dieser Reaktivverdünner, vorzugsweise Triglycidylether, besonders bevorzugt als Gemisch aus 1,4-Butandioldiglycidylether und Trimethylolpropantriglycidylether.

Geeignete Reaktivverdünner verfügen in einer zweckmäßigen Ausgestaltung über nur eine einzige Epoxidgruppe, z.B. monofunktionelle Glycidylether auf Basis eines aliphatischen und aromatischen Alkohols. Exemplarisch seien para-tert-Butylphenylglycidylether, n-Butylglycidylether, Phenylglycidylether, ortho-Kresylglycidylether, C₁₂-C₁₄-Glycidylether und 2-Ethylhexylglycidylether, genannt, wobei para-tert-Butylphenylglycidylether unter diesen bevorzugt ist.

Bevorzugt unter den geeigneten Reaktivverdünnern sind di- und trifunktionelle Glycidylether sowie höherfunktionelle Glycidylether auf Basis insbesondere eines aliphatischen Alkohols oder eines aromatischen Alkohols, beispielsweise eines Alkylphenols. Exemplarisch seien Butandioldiglycidylether, Hexandioldiglycidylether, Neopentylglycoldiglycidylether, Dimethylolcyclohexandiglycidylether, Trimethylolpropanpolyglycidylether, Poly(tetramethylennoxid)diglycidylether und Polyoxyalkylendiglycidylether, z.B. Polyoxypropylenglycoldiglycidylether, genannt, wobei Hexandioldiglycidylether besonders bevorzugt ist.

Für diejenige Variante des erfindungsgemäßen Verfahrens, bei der in Schritt a) nur der Reaktivverdünner, nicht jedoch auch ein Epoxidharz zur Verfügung gestellt wird, hat sich als besonders bevorzugt erwiesen, auf di- und/oder trifunktionelle Glycidylether und/oder höherfunktionelle Glycidylether auf Basis eines aliphatischen oder aromatischen Alkohols, insbesondere auf Basis eines aliphatischen Alkohols, als Reaktivverdünner zurückzugreifen.

Optional umfasst das erfindungsgemäße Verfahren auch die Zurverfügungstellung von Alkylphenolen (Schritt d)). Soweit solche Alkylphenole zum Einsatz kommen, setzt man bevorzugt ortho- und/oder para-Alkylphenole ein. Der Alkylrest kann hierbei z.B. eine C₁-C₁₈-Einheit darstellen, z.B. mit C₃-C₁₈-Gliedern in geradkettiger Form.

Als poröse partikuläre anorganische Füllstoffmaterialien kommen z.B. geschäumte oder geblähte mineralische Materialien in Betracht. Hierbei kann das mineralische Material ausgewählt sein aus der Gruppe bestehend aus Glas, Keramik, Ton und Tonerde oder deren beliebigen Mischungen. Geeignete poröse partikuläre anorganische Füllstoffmaterialien genügen hierbei in einer Ausführungsform auch den Anforderungen an leichte Gesteinskörnungen nach DIN EN 13055-1.

Bevorzugt werden als poröse partikuläre anorganische Füllstoffmaterialien Blähton, Blähschiefer, z.B. expandiertes Glimmerschiefergranulat, Hohlglaskugeln, Hohlkeramikkugeln, Mineralblähglas, z.B. geschäumtes Blähglas und/oder Blähglasgranulate, Blähperlite, Blähglimmer, insbesondere geblähtes oder geschäumtes Vermiculit, Lavaschlacke, Tuff oder Bims oder deren beliebige Mischungen eingesetzt. Hierbei kann sowohl auf geschlossenporige als auch auf offenporige poröse partikuläre anorganische Füllstoffmaterialien zurückgegriffen werden. Bei geschlossenporigen porösen partikulären anorganischen Füllstoffmaterialien ist die Oberfläche der Füllstoffpartikel im Wesentlichen verschlossen und zeigt keine Porenöffnungen, diese liegen dann im Inneren des Partikels vor. In einer besonders geeigneten Ausgestaltung setzt sich das für das erfindungsgemäße Verfahren zur Verfügung gestellte poröse partikuläre anorganische Füllstoffmaterial aus geschlossenporigen und offenporigen Füllstoffen zusammen. Das poröse partikuläre anorganische Füllstoffmaterial weist bevorzugt eine durchschnittliche Teilchengröße im Bereich von 0,1 mm bis 8 mm, besonders bevorzugt im Bereich von 0,2 mm bis 6 mm und insbesondere im Bereich von 0,5 mm bis 4 mm, auf. Die Teilchengrößenverteilung der porösen partikulären anorganischen Füllstoffmaterialien kann dabei in einer zweckmäßigen Ausgestaltung monomodal sein.

Überraschenderweise hat sich gezeigt, dass sich sehr gute Materialeigenschaften für die mit dem erfindungsgemäßen Verfahren erhältlichen Baukörper hinsichtlich Festigkeit und Gewicht auch bei Verwendung solcher poröser partikulärer anorganischer Füllstoffmaterialien erhalten lassen, die eine enge Teilchengrößenverteilung aufweisen. Bei solchen Füllstoffmaterialien liegt in einer ersten Ausführungsform die mittlere Teilchengröße bevorzugt im Bereich von 0,3 mm bis 1,5 mm und besonders bevorzugt im Bereich von 0,5 mm bis 1,0 mm, in einer zweiten Ausführungsform im Bereich von 0,5 mm bis 3,0 mm, besonders bevorzugt im Bereich von 1,0 mm bis 2,0 mm, und in einer dritten Ausführungsform bevorzugt im Bereich von 1,5 mm bis 5,0 mm und besonders bevorzugt im Bereich von 2,0 mm bis 4,0 mm. Hierbei kann z.B. auch auf solche porösen partikulären anorganischen Füllstoffmaterialien zurückgegriffen werden mit einer Kornklasse bzw. Korngröße, auch Korngruppe genannt, im Bereich von 0,1 bis 0,3 mm, 0,1 bis 0,6 mm, 0,1 bis 0,9 mm, 0,25 bis 0,5 mm, 0,25 bis 1,0 mm, 0,25 bis 1,5 mm, 0,5 bis 1,0 mm, 0,5 bis 2,0 mm, 0,5 bis 3,0 mm, 1,0 bis 2,0 mm, 1,0 bis 4,0 mm, 1,0 bis 6,0 mm, 2,0 bis 4,0 mm, 2,0 bis 8,0 mm, 2,0 bis 12,0 mm, 4,0 bis 8,0 mm, 4,0 bis 12,0 mm, 4,0 bis 16,0 mm, 8,0 bis 16,00 mm oder 8,0 bis 16,0 mm. Bevorzugt sind die Korngruppen 0,1 bis 0,3 mm, 0,25 bis 0,5 mm, 0,5 bis 1,0 mm, 1,0 bis 2,0 mm, 2,0 bis 4,0 mm, 4,0 bis 8,0 mm oder 8,0 bis 16,0 mm. In einer bevorzugten Ausführungsform unterscheidet sich die Kornobergrenze von der Kornuntergrenze maximal um den Faktor 4, besonders bevorzugt maximal um den Faktor 3 und insbesondere maximal um den Faktor 2. Selbstverständlich können auch solche Materialien eingesetzt werden, bei denen die Unter- und die Oberkorngrenze sich beispielsweise mindestens um den Faktor 5 oder mindestens um den Faktor 10 unterscheiden. Bei Festlegung des für den erfindungsgemäßen Baukörper zu verwendenden Teilchengrößenbereichs bzw. bei Festlegung der Kornklasse liegen in der Regel eine sogenannte Unterkorn- und eine sogenannte Oberkornfraktion vor. Das heißt der größte Teil der Füllstoffpartikel verfügt über eine Korngröße/Partikelgröße, die im vorangehend angegebenen Bereich der Kornklassen liegt. Für die Bestimmung der vorangehend beschriebenen Korngruppen kann auch auf die Norm EN 13139 zurückgegriffen werden. Bevorzugt liegen bei einem der vorangehend genannten Teilchengrößenbereiche/Kornklassen maximal 15 Gew.-%, bevorzugt maximal 10 Gew.-% und besonders bevorzugt maximal 5 Gew.-%, der Füllstoffpartikel mit einer Teilchengröße oberhalb der oberen Bereichsgrenze/Korngrenze und/oder maximal 20 Gew.-%, bevorzugt maximal 15 Gew.-% und besonders bevorzugt maximal 10 Gew.-% der Füllstoffpartikel mit einer Teilchengröße unterhalb der unteren Bereichsgrenze/Korngrenze vor. Selbstverständlich können auch beliebige Mischungen an Korngruppen, wie vorangehend beschrieben, als poröse partikuläre anorganische Füllstoffmaterialien eingesetzt werden.

Die Korngruppe wird im Allgemeinen durch die Angabe von zwei Siebgrößen (Größen der Begrenzungssiebe) definiert, z.B. die Korngruppe 2,0 bis 4,0 mm, auch 2/4 mm genannt. Dabei wird das untere Begrenzungssieb regelmäßig mit "d" (Nenn-Kleinstkorn) und das obere mit "D" (Nenn-Größtkorn) bezeichnet. In dem genannten Beispiel der Korngruppe 2,0 bis 4,0 mm ist "d" = 2 mm und "D" = 4 mm. In jeder Korngruppe liegen häufig noch Überkorn-Anteile (Anteile > D) und Unterkorn-Anteile (Anteile < d) vor. Demgemäß ist das für die Bezeichnung der Korngruppe angegebene Nenn-Kleinstkorn nicht das in der Korngruppe enthaltene kleinste Korn; ebenso ist das für die Bezeichnung der Korngruppe angegebene Nenn-Größtkorn nicht das größte Korn einer Korngruppe angegebene Korn. Mit anderen Worten: In einer Korngruppe sind auch kleinere Körner enthalten als das Nenn-Kleinstkorn und auch größere Körner als das Nenn-Größtkorn. Für die Siebgrößen kann auf die Werte des Grundsiebsatzes oder die Werten des Grundsiebsatzes und der Ergänzungssiebsätze 1 oder 2 gemäß der EN 12620 zurückgegriffen werden. Der Grundsiebsatz umfasst hierbei die Siebgrößen: 0, 1, 2, 4, 8, 16, 31,5 und 63 mm. Der Ergänzungssiebsatz 1 enthält zusätzlich die Siebgrößen 5,6, 11,2, 22,4 und 45 mm. Der Ergänzungssiebsatz 2 enthält zusätzlich zum Grundsiebsatz die Siebgrößen 6,3, 10, 12,5, 14, 20 und 40 mm. Die Bereichsgrenzen in Form von nicht-ganzen Zahlen werden häufig auch gerundet wiedergegeben.

Es ist demgemäß für die Erlangung von Baukörper mit ausgeprägter mechanischer Festigkeit bei gleichzeitig relativ geringem Gewicht nicht mehr erforderlich, darauf zu achten, dass über die Verwendung von Füllstoffmaterialien mit stark voneinander abweichendem Größenprofil eine möglichst hohe Packungsdichte erhalten wird.

Für das erfindungsgemäße Verfahren wird bevorzugt auf partikuläre anorganische Füllstoffmaterialien mit durchschnittlichem spezifischen Gewicht (bestimmt gemäß EN 1097-6) von weniger als 1 g/cm³, insbesondere von 0,5 g/cm³ oder weniger, zurückgegriffen.

Des Weiteren kann in einer zweckmäßigen Ausgestaltung des erfindungsgemäßen Verfahrens vorgesehen sein, dass, bezogen auf die Gesamtmenge an zur Verfügung gestelltem porösen partikulären anorganischen Füllstoffmaterial, 40 bis 80 Gew.-%, bevorzugt 50 bis 75 Gew.-% und besonders bevorzugt 55 bis 65 Gew.-%, an porösem partikulären anorganischen Füllstoffmaterial mit einer mittleren Teilchengröße im Bereich von 0,1 bis 1,0 mm, bevorzugt im Bereich von 0,15 bis 0,75 mm und besonders bevorzugt im Bereich von 0,25 bis 0,5 mm, und 20 bis 60 Gew.-%, bevorzugt 25 bis 50 Gew.-% und besonders bevorzugt 35 bis 45 Gew.-%, an porösem partikulären anorganischen Füllstoffmaterial mit einer mittleren Teilchengröße im Bereich von 1,2 bis 8,0 mm, bevorzugt im Bereich von 1,5 bis 6,0 mm und besonders bevorzugt im Bereich von 2,0 bis 4,0 mm, eingesetzt werden.

Das erfindungsgemäße Verfahren zeichnet sich ferner in einer bevorzugten Ausgestaltung dadurch aus, dass der Pressdruck größer 1,0 N/mm², bevorzugt größer oder gleich 1,5 N/mm² und besonders bevorzugt größer 2,0 N/mm², ist. Mit dem erfindungsgemäßen Verfahren wird das poröse partikuläre anorganische Füllstoffmaterial beim Verpressen mit dem aushärtenden bzw. ausgehärteten Epoxidharz einem derart hohen Pressdruck ausgesetzt, der dazu führt, dass diese Füllstoffmaterialien zumindest in Teilen in Bruchstücke zerteilt bzw. aufgebrochen werden. Demgemäß wird das Verfahren in der Weise geführt, dass der Verlust der ursprünglichen Form der zur Verfugung gestellten Füllstoffmaterialien zumindest in Teilen angestrebt und umgesetzt wird. Auf diese Weise gelingt eine sehr kompakte Schichtung bzw. Verteilung des Füllstoffmaterials, wobei gleichzeitig die für die Anbindung an das aushärtende Epoxidharz verfügbare Fläche vergrößert wird. Dieser Effekt wird auch noch dadurch verstärkt, dass es sich bei dem Füllstoffmaterial um partikuläres poröses Material handelt. Durch das Aufbrechen der Struktur dieser Füllstoffmaterialien beim Verpressvorgang wird eine Vielzahl an porösen Bereichen offengelegt, was zu einer signifikanten Vergrößerung der für die Anbindung mit dem Bindemittel verfügbaren Fläche führt. Wenngleich mit dem erfindungsgemäßen Verfahren mit relativ hohen Pressdrücken gearbeitet wird, sind nicht nur Baukörper, insbesondere Bauplatten, zugänglich, die über ihre gesamte Dicke gleichmäßig stark verpresst sind, vielmehr sind auch solche Baukörper, insbesondere Bauplatten, zugänglich, die in ihren Außenbereichen stärker verpresst sind als im Innenbereich.

Optional umfasst das erfindungsgemäße Verfahren auch die Zurverfügungstellung von mindestens einem Hydrophobierungsmitteln (Schritt e)), beispielsweise in Form eines Silikonharzes. Das erfindungsgemäße Verfahren zeichnet sich ferner dadurch aus, dass in einer bevorzugten Ausgestaltung das Epoxidharz, der Epoxidharz-Härter, das poröse partikuläre anorganische Füllstoffmaterial, der Reaktivverdünner, das Hydrophobierungsmittel und/oder die gemäß Schritt f) erhaltene Mischung lösemittelfrei sind. Das erfindungsgemäße Verfahren zeichnet sich demgemäß auch dadurch aus, dass es ohne bzw. nur mit einer sehr geringen Menge an Lösemitteln durchgeführt werden kann.

Das erfindungsgemäße Verfahren erfordert die Beaufschlagung der nach Schritt f) erhaltenen Mischung mit Wärme, d.h. der Mischung ist in einer zweckmäßigen Ausgestaltung in dem Formbehältnis Wärmeenergie zuzuführen. Demgemäß beinhaltet das Verfahren das Erwärmen der Mischung gemäß Schritt f) in dem Formbehältnis auf Temperaturen oberhalb der Raumtemperatur, d.h. oberhalb von 18°C. In einer besonders geeigneten Ausführungsvariante ist vorgesehen, das die in dem Formbehältnis vorliegende Mischung, insbesondere während der Beaufschlagung mit dem Pressdruck, eine Temperatur im Bereich von 60 bis 160° C, insbesondere im Bereich von 80 bis 140° C, aufweist bzw. auf eine solche Temperatur erwärmt wird. Für die Erwärmung der Mischung in dem Formbehältnis reicht es regelmäßig aus, wenn der Boden des Formbehältnisses sowie gegebenenfalls der Pressstempel, zum Beispiel die Pressplatte, beim Pressvorgang, insbesondere auf die vorangehend genannten Temperaturen, erwärmt sind. Auf diese Weise kann hinreichend Wärmeenergie in die in dem Formbehältnis vorliegende Mischung eingetragen werden, um den Aushärtvorgang zu initiieren bzw. zu forcieren. Besonders bevorzugte Pressstempel umfassen eine Metallplatte, insbesondere eine Metallplatte, oder sind aus Metall, insbesondere Aluminium, gebildet. Indem Wärmeenergie beim Pressvorgang in die in dem Formbehältnis vorliegende Mischung eingetragen wird, wird nicht nur die vollständige Aushärtung herbeigeführt, ebenfalls trägt die Erwärmung zu einer Verringerung der Viskosität der Mischung aus den Komponenten, die das ausgehärtete Epoxidharz bilden, insbesondere erhalten gemäß Schritt f1), bei, wodurch auch eine bessere und vollständigere Einbettung der Füllstoffpartikel sowie der Bruchstücke dieser Füllstoffpartikel gelingt. Außerdem fördert dieser Wärmeeintrag die Benetzung der anorganischen Partikel mit dem Bindemittel. Es hat sich überraschend gezeigt, dass auch mit sehr dünnen Bindemittelfilmen zwischen benachbarten Füllstoffpartikeln und den Bruchstücken hiervon, die sich bei Verwendung der mit dem erfindungsgemäßen Verfahren verwendeten hohen Pressdrücke, die zur zumindest teilweisen Zerstörung der Füllstoffpartikel führen, gleichwohl eine sehr feste Anbindung einstellt. Demgemäß erlaubt es das erfindungsgemäße Verfahren, den Bindemittelanteil sehr gering zu halten, beispielsweise unterhalb von 10 Gewichtsprozent oder sogar unterhalb von 7 Gewichtsprozent.

Zur Herbeiführung eines beschleunigten Herstellungsverfahrens mit kurzen Taktzeiten wird vorzugsweise auf ein Formbehältnis mit sehr guter Wärmeleitfähigkeit zurückgegriffen.

Hierbei kommen insbesondere solche Formbehältnisse zum Einsatz, die aus einem Material gebildet sind mit einer Wärmeleitfähigkeit größer oder gleich 150 W/(m • K) und bevorzugt größer 200 W/(m • K). In einer besonders bevorzugten Ausführungsform des erfindungsgemäßen Verfahrens ist das Formbehältnis aus Aluminium oder Kupfer oder einer Aluminiumlegierung oder einer Kupferlegierung gebildet. Ganz allgemein hat sich gezeigt, dass durch Einbringung von Wärme in die in dem Formbehältnis vorliegende Mischung der Herstellprozess beschleunigt, das heißt die Taktzeiten reduziert werden können.

Selbstverständlich ist es möglich, während des Herstellungsprozesses weitere Komponenten wie Alkylphenole, insbesondere p-tert-Butylphenol, und/oder Hydrophobierungsmittel wie Silikonharze zuzugeben. Vorteilhafterweise werden diese Komponenten in dem Verfahrensschritt f) zu dem Epoxidharz und/oder dem Reaktivverdünner sowie dem Epoxidharz-Härter oder einer beliebigen Mischung dieser Komponenten gegeben. Alkylphenole werden in einer bevorzugten Ausführungsform des erfindungsgemäßen Verfahrens dem Epoxid-Härter zugesetzt, insbesondere in lösemittelfreier Form.

Als besonders vorteilhaft hat sich ein solches Verfahren herausgestellt, bei dem der Schritt f) unterteilt ist in
f1) Vermischen von Epoxidharz mit Epoxidharz-Härter und gegebenenfalls Alkylphenol und/oder Hydrophobierungsmittel oder
   Vermischen des mindestens einen Reaktivverdünners mit Epoxidharz-Härter und gegebenenfalls Alkylphenol und/oder Hydrophobierungsmittel oder
   Vermischen von Epoxidharz und Reaktivverdünner mit Epoxidharz-Härter und gegebenenfalls Alkylphenol und/oder Hydrophobierungsmittel und
f2) Vermischen der in Schritt f1) erhaltenen Mischung mit dem porösen partikulären anorganischen Füllstoffmaterial in der Weise, dass das Epoxidharz und/oder der Reaktivverdünner nicht oder nicht vollständig ausgehärtet wird.

Hierbei ist es besonders vorteilhaft, wenn das Epoxidharz oder die gemäß Schritt f1) erhaltene Mischung vor und/oder bei der Mischung mit dem porösen partikulären anorganischen Füllstoffmaterial über eine Viskosität (bestimmt bei 25°C) nicht oberhalb von 500 mPas, bevorzugt nicht oberhalb von 400 mPas und besonders bevorzugt nicht oberhalb von 200 mPas verfügt. Solche Epoxidharze sind besonders geeignet, die im ausgehärteten Zustand über eine Glasübergangstemperatur von mindestens 60°C, bevorzugt von mindestens 70°C, besonders bevorzugt von mindestens 80 °C, verfügen. In einer bevorzugten Ausgestaltung des Verfahrens werden das gemäß Schritt a) zur Verfügung gestellte Epoxidharz und der gemäß Schritt b) zur Verfügung gestellte Epoxidharz-Härter vor der Zugabe zu dem porösen partikulären anorganischen Füllstoffmaterial miteinander, insbesondere intensiv, vermischt. Vorzugsweise wird die erhaltene Mischung unverzüglich zu dem porösen partikulären anorganischen Füllstoffmaterial gegeben. Des Weiteren hat es sich als zweckmäßig erwiesen, wenn zu dem Epoxidharz gleichzeitig oder vorab das Hydrophobierungsmittel zugegeben wird. Ferner werden in einer bevorzugten Ausführungsform des erfindungsgemäßen Verfahrens die Alkylphenole dem Epoxid-Härter zugesetzt, insbesondere in lösemittelfreier Form. Epoxid-Härter im Sinne der Erfindung umfassen ebenfalls Verbindungen, soweit dies erforderlich ist, mit denen die vorliegend beschriebenen Reaktivverdünner ausgehärtet werden können.

Das Gewichtsverhältnis von Epoxidharz zu Härter wird vorteilhafter Weise im Bereich von 200 : 30 bis 50 : 30, vorzugsweise im Bereich von 150 : 30 bis 75 : 30, eingestellt.

Es hat sich überraschender Weise gezeigt, dass es mit dem erfindungsgemäßen Verfahren möglich ist, Baukörper zu erhalten, die nur über einen sehr geringen Anteil an Epoxidharz verfügen, ohne Einbußen bei der mechanischen Festigkeit in Kauf nehmen zu müssen. Demgemäß kann in einer vorteilhaften Ausgestaltung der Gewichtsanteil an Epoxidharz und/oder Reaktivverdünner und gegebenenfalls dem Epoxidharz-Härter, bezogen auf das Gesamtgewicht an dem porösen partikulären anorganischen Füllstoffmaterial und dem Epoxidharz und/oder Reaktivverdünner sowie gegebenenfalls dem Epoxidharz-Härter unterhalb von 12 %, bevorzugt bei 8,0 % oder darunter und besonders bevorzugt bei 7,0 % oder darunter, liegen. Insbesondere wenn diese Anteile bei 8,0 % oder darunter oder bei 7,0 % oder darunter liegen, erhält man Baukörper, die eine geringere Brandneigung besitzen als die aus dem Stand der Technik bekannten Baukörper bzw. Leichtbaukörper. Mit solchen Baukörpern, insbesondere Bauplatten, wird verlässlich ein Brennwert kleiner oder gleich 3 MJ/kg erhalten (bestimmt nach DIN EN ISO 1716:2010-11).

Zur Verringerung der Taktzeiten und/oder zur Verminderung von Ausschussware kann man in einer Ausgestaltung das Formbehältnis mit bzw. dessen Wandungen mit einem Trennmittel behandeln. Hierbei kommen regelmäßig Wachsverbindungen zum Einsatz.

Insbesondere wenn besondere Anforderungen an die Festigkeit und Steifigkeit eines mit dem erfindungsgemäßen Verfahren erhältlichen Baukörpers, insbesondere einer Bauplatte, gestellt werden, hat es sich als vorteilhaft erwiesen, mindestens eine Seite des Baukörpers bzw. der Bauplatte mit einem Lagenmaterial zu versehen. Hierbei kann es sich zum Beispiel um eine gewirkte, gewebte, oder eine gestrickte Lage oder um eine Vlieslage handeln. Zweckmäßigerweise wird für das Lagenmaterial auf ein sogenanntes Armierungsgewebe zurückgegriffen. Solche Armierungsgewebe kommen regelmäßig bei Putzbeschichtungen zum Einsatz. Eine einseitige Beschichtung des Baukörpers bzw. der Bauplatte kann entweder dadurch erhalten werden, dass man das Lagenmaterial in das Formbehältnis einlegt, bevor die Mischung gemäß Schritt f) in dieses Formbehältnis gegeben wird. Alternativ ist es möglich, zunächst die Mischung gemäß Schritt f) in das Formbehältnis einzufüllen und anschließend hierauf ein Lagenmaterial aufzulegen, bevor die Mischung mit Druck (Schritt k)) beaufschlagt wird. Selbstverständlich lassen sich mit dem erfindungsgemäßen Verfahren ohne weiteres auch Baukörper bzw. Bauplatten erhalten, die beidseitig mit dem Lagenmaterial beschichtet bzw. versehen sind. Hierfür sind die beiden vorangehend genannten Einzelschritte miteinander zu kombinieren. Demgemäß umfasst das erfindungsgemäße Verfahren in einer Ausgestaltung ferner den/die Schritte:
g) Behandeln des Formbehältnisses, insbesondere derjenigen Wandungen des Formbehältnisses, die in Kontakt mit der Mischung gemäß Schritt f) geraten, mit mindestens einem Trennmittel, insbesondere einem Wachs, und/oder
h) Einlegen einer ersten Lage in das Formbehältnis, bevor die Mischung gemäß Schritt f) in das Formbehältnis gemäß Schritt i) gegeben wird und/oder
j) Auflegen mindestens einer zweiten Lage auf die in das Formbehältnis gegebene Mischung, bevor die Beaufschlagung mit Druck gemäß Schritt k) erfolgt.

Hierbei führt ein solches Verfahren in besonders zuverlässiger Weise zu Baukörpern, insbesondere Bauplatten, mit ausreichender mechanischer Festigkeit, insbesondere ausreichender Biegezugfestigkeit, bei dem darauf geachtet wird, dass der Anteil an Epoxidharz und Epoxidharz-Härter sowie gegebenenfalls Alkylphenol und/oder Hydrophobierungsmittel oder der Anteil an Reaktivverdünner und Epoxidharz-Härter sowie gegebenenfalls Alkylphenol und/oder Hydrophobierungsmittel oder der Anteil an Epoxidharz, Reaktivverdünner und Epoxidharz-Härter sowie gegebenenfalls Alkylphenol und/oder Hydrophobierungsmittel und die Dichte des mit erfindungsgemäßen Verfahren erhaltenen Baukörpers derart gewählt oder eingestellt werden, dass das Produkt aus 1) dem Anteil an Epoxidharz und Epoxidharz-Härter sowie gegebenenfalls Alkylphenol und/oder Hydrophobierungsmittel oder dem Anteil an Reaktivverdünner und Epoxidharz-Härter sowie gegebenenfalls Alkylphenol und/oder Hydrophobierungsmittel oder dem Anteil an Epoxidharz, Reaktivverdünner und Epoxidharz-Härter sowie gegebenenfalls Alkylphenol und/oder Hydrophobierungsmittel und 2) der Dichte des mit dem Verfahren erhaltenen Baukörpers, bestimmt in kg/m³, größer oder gleich 25 kg/m³ und bevorzugt größer oder gleich 30 kg/m³ ist sowie besonders bevorzugt im Bereich von 33 kg/m³ bis 37 kg/m³ liegt, insbesondere bei etwa 35 kg/m³. Das aufgefundene Resultat stellt sich insbesondere bei Verwendung von Bauplatten, vorzugsweise Putzträgerplatten, oder von aus Baukörpern erhaltenen Testkörpern in Plattenform mit einer Dicke von etwa 12 mm ein.

Außerdem sieht eine Weiterentwicklung dieser bevorzugten Variante des erfindungsgemäßen Verfahrens insbesondere mit Blick auf den Erhalt einer verlässlich guten mechanischen Festigkeit, vorzugsweise Biegezugsfestigkeit vor, dass der Anteil an Epoxidharz und Epoxidharz-Härter sowie gegebenenfalls Alkylphenol und/oder Hydrophobierungsmittel oder der Anteil an Reaktivverdünner und Epoxidharz-Härter sowie gegebenenfalls Alkylphenol und/oder Hydrophobierungsmittel oder der Anteil an Epoxidharz, Reaktivverdünner und Epoxidharz-Härter sowie gegebenenfalls Alkylphenol und/oder Hydrophobierungsmittel und die Dichte des mit dem Verfahren erhaltenen Baukörpers und die Gesamtoberfläche an porösem partikulären anorganischen Füllstoffmaterial derart gewählt oder eingestellt werden, dass das Produkt aus 1) dem Anteil an Epoxidharz und Epoxidharz-Härter sowie gegebenenfalls Alkylphenol und/oder Hydrophobierungsmittel oder dem Anteil an Reaktivverdünner und Epoxidharz-Härter sowie gegebenenfalls Alkylphenol und/oder Hydrophobierungsmittel oder dem Anteil an Epoxidharz, Reaktivverdünner und Epoxidharz-Härter sowie gegebenenfalls Alkylphenol und/oder Hydrophobierungsmittel, 2) der Dichte des mit dem Verfahren erhaltenen Baukörpers, bestimmt in kg/m³, und 3) der Gesamtoberfläche des gemäß Schritt c) zur Verfügung gestellten porösen partikulären anorganischen Füllstoffmaterials, bestimmt in m²/kg, größer oder gleich 300/m und bevorzugt größer oder gleich 400/m ist und besonders bevorzugt im Bereich von 450/m bis 550/m, insbesondere bei etwa 500/m, liegt. Auch hier stellt sich das aufgefundene Resultat insbesondere bei Verwendung von Bauplatten, vorzugsweise Putzträgerplatten, oder von aus Baukörpern erhaltenen Testkörpern in Plattenform mit einer Dicke von etwa 12 mm ein.

Mit den vorangehend geschilderten gefundenen Verfahrensvarianten ist es möglich, durch Einstellung der Bindemittelanteile und gegebenenfalls der Gesamtoberfläche des gemäß Schritt c) zur Verfügung gestellten porösen partikulären anorganischen Füllstoffmaterials sowie unter Berücksichtigung der angestrebten Dichte der mit dem erfindungs gemäßen Verfahren hergestellten Baukörper, insbesondere Bauplatten, verlässlich und reproduzierbar zu Produkten mit hinreichender Festigkeit, insbesondere Biegezugfestigkeit, zu gelangen. Zum Beispiel können mit dem erfindungsgemäßen Verfahren selbst für Baukörper, insbesondere Bauplatten, mit sehr kleiner Dichte durch Wahl eines relativ hohen Bindemittelanteils, beispielsweise im Bereich von 20 bis 25 Gewichtsprozent, bezogen auf das Gesamtgewicht des Baukörpers, ausreichende Festigkeiten erhalten werden.

Die auf eine vorgegebene Masse bezogene Gesamtoberfläche des gemäß Schritt c) zur Verfügung gestellten porösen partikulären anorganischen Füllstoffmaterials lässt sich wie folgt ermitteln:
Kornoberfläche pro Masse = (Kornoberfläche pro Volumen des porösen partikulären anorganischen Füllstoffmaterials) / (mittlere Partikeldichte einer Mischung).

Das Volumen des porösen partikulären anorganischen Füllstoffmaterials stellt hierbei nicht das Schüttvolumen, sondern das tatsächliche Volumen des partikulären Füllstoffmaterials dar. Die Kornoberfläche pro Volumen des porösen partikulären anorganischen Füllstoffmaterials kann mithilfe der mit einem Laserbeugungsspektrometer ermittelten Kornzusammensetzung bestimmt werden. Hierbei wird jede Partikelfraktion einzeln betrachtet, wie nachfolgend im Detail noch ausgeführt wird. Zur Ermittlung der Kornoberfläche wird nicht der Mittelwert der betrachteten Partikelfraktion herangezogen, sondern dessen obere Grenze. Die Summe der auf diese Weise erhaltenen Einzelwerte liefert die Kornoberfläche pro Volumen aller Partikel. Liegen die Korngrenzen einer Partikelfraktion beispielsweise bei 0,5 und 1,0 mm, ist deren Partikelvolumenanteil an der Gesamtmischung mit dem Faktor (6/1,0 mm) zu multiplizieren. Die hier zur Anwendung kommende Berechnung der Kornoberfläche geht von der Annahme aus, dass sämtliche Partikel kugelförmig sind. Auch wird angenommen, dass diese Partikel eine geschlossene kugelförmige Oberfläche aufweisen. Diese Annahmen liegen im Grunde auch der Messung mit dem Laserbeugungsspektrometer zu Grunde. Ein kugelförmiger Partikel mit Spalten und Riefen wird folglich nicht anders behandelt als ein kugelförmiger Partikel mit einer geschlossenen Oberfläche. Beide Partikel verfügen im Grunde in einer Mischung über den gleichen Platzbedarf bei gleichem Durchmesser. Für die Bestimmung der Kornoberfläche kann z.B. auf die nachfolgend genannten Kornklassen, die durch jeweils aufeinander folgende Werte für die Korngrenzen (Durchmesser in µm) festgelegt werden, ermittelt werden:
0,011 0,013 0,015 0,017 0,020 0,023 0,026 0,030 0,034 0,039 0,044 0,051 0,058 0,067 0,076 0,087 0,100 0,115 0,131 0,150 0,172 0,197 0,226 0,259 0,296 0,339 0,389 0,445 0,510 0,584 0,669 0,766 0,877 1,005 1,151 1,318 1,510 1,729 1,981 2,269 2,599 2,976 3,409 3,905 4, 472 5,122 5,867 6,720 7,697 8,816 10,09 11,56 13,24 15,17 17,37 19,90 22,79 26,11 29,90 34,25 39,23 44,93 51,47 58,95 67,52 77,34 88,58 101,4 116,2 133,1 152,4 174,6 200,0 229 ,0 262,3 300,5 344,2 394,2 451,5 517,2 592,3 678,5 777,1 890,1 1019 1167 1337 1531 1754 2009 2301 2636 3019 3458 3961 4537 5197 5952 6817 7809, 8944 10244.

Die vorangehend wiedergegebenen Bereichsgrößen der aufeinander folgenden Kornklassen verhalten sich logarithmisch und nicht etwa linear. Die Korngrenzen der Kornklassen werden regelmäßig durch das eingesetzte Laserbeugungsspektrometer vorgegeben, wobei den Ober- und Untergrenzen der jeweiligen Kornklassen eine logarithmische Abstandsbestimmung zugrunde liegt.

Das partikuläre Füllstoffmaterial und das Reaktionsharz, umfassend Epoxidharz und/oder Reaktivverdünner, können in herkömmlichen Mischaggregaten miteinander vermengt werden. In einer bevorzugten Ausgestaltung ist das Mischaggregat gleichzeitig auch das Förderaggregat, beispielsweise in Form eines Schneckenförderers, mit dessen Hilfe die Mischung zu dem Formbehältnis transportiert und in dieses eingefüllt wird. So kann das Mischaggregat neben den Elementen des Schneckenförderers auch Mischelemente, beispielsweise in Form von Stiften, die in dem Schneckenförderer angebracht sind, aufweisen, so dass in dem Förderer die einzelnen Komponenten nicht nur transportiert, sondern auch miteinander vermischt werden. Hierbei hat es sich als sehr zweckmäßig erwiesen, dass Förderrohr geneigt zu positionieren, so dass die Materialförderung durch die Einwirkung der Schwerkraft unterstützt wird. Der Mischvorgang wird dazu genutzt, die Oberfläche der Füllstoffpartikel mit der bzw. den Bindemittelkomponenten zu benetzen. Bei diesem Vorgang ist es vorteilhaft, Bindemittelkomponenten mit geringer Viskosität einzusetzen, die darüber hinaus vorteilhafterweise während des Prozesses des Mischens ihre niedrige Viskosität beibehalten. Auch ist es von Vorteil, wenn diese Bindemittelkomponenten ein hohes Benetzungsvermögen aufweisen. Indem die Füllstoffpartikel beim Pressvorgang zerstört bzw. aufgebrochen und dabei neue Oberflächen geschaffen werden, können die niedrigviskosen und gut benetzenden Bindemittelkomponenten auch mit diesen neuen Oberflächen wechselwirken bzw. an diese anbinden. Der Pressdruck, der auf die nach Schritt f) erhaltene Mischung in dem Formbehältnis ausgeübt wird, ist hinreichend hoch, um zumindest eine partielle Zerstörung der Füllstoffpartikel zu bewirken. Hierbei kann in einer besonders vorteilhaften Ausführungsform vorgesehen sein, dass der Pressvorgang beinhaltet, dass nicht der gesamte Baukörper, insbesondere die Bauplatte, während des Pressvorgangs gleichförmig mit dem Pressdruck beaufschlagt wird, sondern dass Areale des Baukörpers, insbesondere der Bauplatte, sukzessive mit dem Pressdruck beaufschlagt werden, beispielsweise durch Verwendung einer Pressplatte, die über mindestens zwei, insbesondere mindestens vier Pressstempel angefahren wird. In dem Formbehältnis wird die Mischung nicht nur verpresst, sondern regelmäßig ebenfalls über einen bestimmten Zeitraum erhöhten Temperaturen, vorzugsweise im Bereich von 80 bis 140°C ausgesetzt. Während dieser Aushärt- bzw. Haltephase kann der Haltedruck gegenüber dem anfänglichen Pressdruck abnehmen. Bevorzugt stellt das Bindemittel ein lösemittelfreies zweikomponentiges Epoxidharz aus einerseits Epoxidharz-Härter und andererseits Bisphenol A, Bisphenol F und einem Reaktivverdünner dar. Das Bindemittelsystem, exklusive Epoxidharz-Härter, insbesondere umfassend oder bestehend aus Bisphenol A, Bisphenol F und dem Reaktivverdünner wird vorzugsweise derart eingestellt, dass es bei einer Temperatur von25°C über eine Viskosität von nicht mehr als 550 mPas verfügt. Besonders gute Eigenschaften lassen sich auch durch Mitverwendung von einem Alkylphenol, insbesondere einem niedrigviskosen Alkylphenol erzielen. Durch den Einsatz solcher Alkylphenole kann die Benetzung der partikulären Füllstoffmaterialien bzw. der Bruchstücke aus diesen Materialien mit den Bindemittelkomponenten bzw. dem Bindemittel verbessert werden. Auch hat sich als vorteilhaft erwiesen, dass sich durch Verwendung solcher Alkylphenole nach dem Aushärten eine geringe bis mittlere Hydrophobierung ausbildet, die einerseits einen Grundschutz gegen übermäßige Wasseraufnahme bietet, andererseits noch stets eine gute Haftung einer Putzbeschichtung zulässt, und zwar ohne dass ein Primer zu verwenden ist. Alkylphenole werden bevorzugt zu dem Epoxid-Härter gegeben, bevor dieser Härter zu dem Epoxidharz und/oder dem Reaktivverdünner gegeben wird.

Die der Erfindung zugrunde liegende Aufgabe wird des weiteren gelöst durch einen Baukörper, insbesondere ein Bauprofil oder eine Bauplatte, zum Beispiel eine Putzträger- oder Sockelschutzplatte, erhältlich nach dem erfindungsgemäßen Verfahren, wie vorangehend geschildert. Diese erfindungsgemäßen Baukörper verfügen in einer zweckmäßigen Ausgestaltung über eine Dichte kleiner oder gleich 800 kg/m³, vorzugsweise kleiner oder gleich 600 kg/m³.

Demgemäß ist Gegenstand der Erfindung ebenfalls ein Baukörper, insbesondere Bauprofil oder Bauplatte, z.B. Putzträger- oder Sockelschutzplatte, umfassend oder bestehend aus mittels Epoxidharz-Härter ausgehärtetem Epoxidharz als Bindemittelmatrix oder mittels Epoxidharz-Härter ausgehärtetem Reaktivverdünner als Bindemittelmatrix oder mittels Epoxidharz-Härter ausgehärtetem Epoxidharz und Reaktivverdünner als Bindemittelmatrix und darin eingebettet einer Vielzahl an Bruchstücken aus einem, insbesondere im Wesentlichen sphärischen, porösen partikulären anorganischen Füllstoffmaterials sowie gegebenenfalls mindestens einem Hydrophobierungsmittel und/oder Alkylphenol und/oder aus porösen partikulären anorganischen Füllstoffmaterial.

Zweckmäßige erfindungsgemäße Baukörper zeichnen sich in einer bevorzugten Ausführungsvariante auch dadurch aus, dass dieser enthält oder besteht aus A1) ausgehärtetem Epoxidharz als Bindemittelmatrix, gebildet in Gegenwart von Epoxidharz und Epoxidharz-Härtern sowie gegebenenfalls von Alkylphenolen und/oder mindestens einem Hydrophobierungsmittel oder
A2) ausgehärtetem Reaktivverdünner als Bindemittelmatrix, gebildet in Gegenwart von Reaktiwerdünner und Epoxidharz-Härtern sowie gegebenenfalls von Alkylphenolen und/oder mindestens einem Hydrophobierungsmittel oder
A3) der ausgehärteten Mischung aus Epoxidharz und Reaktivverdünner als Bindemittelmatrix, gebildet in Gegenwart von Epoxidharz, Reaktivverdünner und Epoxidharz-Härtern sowie gegebenenfalls von Alkylphenolen und/oder mindestens einem Hydrophobierungsmittel,
und B) porösem partikulären anorganischen Füllstoffmaterial.

Erfindungsgemäße Baukörper zeichnen sich insbesondere auch dadurch aus, dass die porösen partikulären anorganischen Füllstoffmaterialen zumindest in Teilen zerstört in Form von Bruchstücken in der Bindemittelmatrix vorliegen und dass das ausgehärtete Epoxidharz die beim Pressen entstandenen Bruchstücke der, insbesondere sphärischen, Füllstoffmaterialien einbindet, insbesondere miteinander verklebt.

Die erfindungsgemäßen Baukörper bzw. Bauplatten verfügen vorzugsweise über eine maximale Biegezugfestigkeit Fₘₐₓ, bestimmt gemäß DIN EN 1015 - Teil 11, Ausgabe 2007, insbesondere wenn an Bauplatten oder an aus Baukörpern erhaltenen Testkörpern in Plattenform, jeweils mit einer Dicke von etwa 12 mm, geprüft, von 1,5 N/mm² oder darüber und bevorzugt von 2,0 N/mm² oder darüber sowie besonders bevorzugt im Bereich von 2,3 N/mm² bis 2,8 N/mm², insbesondere von etwa 2,5 N/mm².

Besonders geeignete Baukörper, insbesondere Bauplatten, zeichnen sich durch eine erste Lage, insbesondere auf oder in einer ersten Seite der Bauplatte vorliegend, und/oder eine zweite Lage, insbesondere auf oder in einer der ersten Seite gegenüberliegenden zweiten Seite der Bauplatte vorliegend, aus, wobei die erste und/oder zweite Lage vorzugsweise eine gewirkte, gewebte oder gestrickte Lage oder eine Vlieslage, insbesondere ein Armierungsgewebe, darstellt.

Außerdem lässt sich mit den erfindungsgemäßen Baukörpern ein sehr gutes Brandschutzverhalten erreichen, und das, obwohl eine organische Bindemittelmatrix zum Einsatz kommt. Demgemäß sind bevorzugte erfindungsgemäße Baukörper durch einen Brennwert kleiner oder gleich 3 MJ/kg gekennzeichnet (bestimmt nach DIN EN ISO 1716:2010-11), sogar inklusive der beschriebenen ersten und/oder zweiten Lagen, z.B. in Form von Armierungsgewebe.

Der vorliegenden Erfindung liegt die überraschende Erkenntnis zugrunde, dass sich, ohne auf eine möglichst hohe Packungsdichte der verwendeten partikulären Füllstoffmaterialien achten zu müssen, Baukörper, insbesondere Leichtbaukörper, mit einer sehr hohen mechanischen Festigkeit erhalten lassen. Es hat sich ferner gezeigt, dass die erfindungsgemäßen Baukörper, insbesondere Bauplatten, einen sehr wirksamen Schallschutz bieten, insbesondere wenn diese Baukörper bzw. -platten bei einer hinterlüfteten Vorhangfassade eingesetzt werden. Auch kann bei einer Vorhangfassade mit einer erfindungsgemäßen Bauplatte der Zwischenraum zwischen Gebäudehülle und Bauplatte mit beliebigem Wärmedämmmaterial gefüllt werden, ohne auf die Festigkeit des Dämmmaterials achten zu müssen. Denn eine hinreichende Festigkeit wird bereits mit der erfindungsgemäßen Bauplatte zur Verfügung gestellt. Es hat sich überraschend gezeigt, dass die nach dem erfindungsgemäßen Verfahren erhältlichen Bauplatten und Baukörper bzw. die erfindungsgemäßen Baukörper und Bauplatten ein hohes Maß an mechanischer Stabilität bieten und beispielsweise Schraubenköpfen einen ausreichenden Widerstand entgegenbringen, so dass diese nicht durchrutschen bzw. durchdrehen. Auch hat sich gezeigt, dass die Bauplatten gemäß der vorliegenden Erfindung sich unter Belastung nicht oder nur wenig verbiegen und darüber hinaus hinreichend schlagfest sind. Dadurch dass man mit dem erfindungsgemäßen Verfahren bereits unter Verwendung nur einer Körnung, d.h. Korngröße bzw. Korngrößenfraktion an partikulärem Füllstoffmaterial zu Baukörpern bzw. Bauplatten mit ausgeprägter mechanischer Festigkeit gelangt, kann der Aufwand für den Transport und die Lagerung von Füllstoffmaterialien erheblich reduziert werden. Mit dem erfindungsgemäßen Verfahren ist es somit nicht länger erforderlich, partikuläre Füllstoffmaterialien mit signifikant unterschiedlichen mittleren Teilchengrößen zu mischen, um zu einer möglichst geringen Packungsdichte zu gelangen. Insbesondere kommt man unabhängig von der Schwankungsbreite bei der Schüttdichte von partikulären Füllstoffmaterialien zu verlässlich guten Ergebnissen mit dem erfindungsgemäßen Verfahren. Des Weiteren hat sich als vorteilhaft erwiesen, dass, obwohl von einer organischen Bindemittelmatrix Gebrauch gemacht wird, ein hoher Brandschutz möglich ist. Auch ist von Vorteil, dass eine hinreichend hohe mechanische Festigkeit bereits mit sehr geringen Mengen an Bindemittel, das heißt an Epoxidharz und/oder Reaktivverdünner, erhalten werden kann. Außerdem haften mineralische Putzbeschichtungen gut und dauerhaft an den erfindungsgemäßen Baukörpern bzw. Bauplatten, und zwar ohne dass diese zuvor mit einem Primer zu behandeln sind. Schließlich zeichnet sie das erfindungsgemäße Verfahren durch eine sehr einfache und zuverlässige Handhabung aus. Dadurch, dass sehr dünnflüssige Epoxidharze bzw. Reaktivverdünner verwendet werden können, sind sehr kurze Taktzeiten beim beheizten Pressen gemäß Schritt k) möglich. Vielfach können die Baukörper bzw. Bauplatten bereits nach wenigen Minuten aus dem Formbehältnis wieder entnommen werden. Von Vorteil ist ebenfalls, dass sich mit dem erfindungsgemäßen Verfahren eine gewünschte mechanische Stabilität durch Einstellung bzw. Verringerung der Bindemittelanteile und/oder der Variation der gewünschten Zieldichte erhalten lässt.

Die in der vorstehenden Beschreibung und in den Ansprüchen offenbarten Merkmale der Erfindung sind für die Verwirklichung der Erfindung in ihren verschiedenen Ausführungsformen wesentlich sein.

## Patentansprüche

1. Verfahren zur Herstellung eines Baukörpers, umfassend die Schritte
a) Zurverfügungstellung mindestens eines Epoxidharzes und/oder der das Epoxidharz bildenden Komponenten oder
Zurverfügungstellung mindestens eines Epoxidharzes und/oder der das Epoxidharz bildenden Komponenten und mindestens eines Reaktivverdünners,
b) Zurverfügungstellung mindestens eines Epoxidharz-Härters,
c) Zurverfügungstellung mindestens eines porösen partikulären anorganischen Füllstoffmaterials,
f) Vermischen von
Epoxidharz, oder
Epoxidharz und Reaktivverdünner oder
die das Epoxidharz bildenden Komponenten oder
die das Epoxidharz bildenden Komponenten und Reaktivverdünner
und
Epoxidharz-Härter und porösem partikulären anorganischen Füllstoffmaterial in der Weise, dass das Epoxidharz oder das Epoxidharz und der Reaktivverdünner nicht oder nicht vollständig ausgehärtet werden,
i) Einbringen der in Schritt f) erhaltenen Mischung in ein Formbehältnis,
k) Beaufschlagen der in dem Formbehältnis vorliegenden Mischung mit Wärme und Pressdruck,
wobei der Pressdruck derart eingestellt wird, dass mindestens ein Teil des porösen partikulären anorganischen Füllstoffmaterials in dem Formbehältnis in Bruchstücke zerkleinert wird und wobei diese Zerkleinerung stattfindet, bevor und/oder während das Epoxidharz oder das Epoxidharz und der Reaktivverdünner durch Einwirkung des Epoxidharz-Härters oder durch Einwirkung des Epoxidharz-Härters und von Wärme aushärtet, wobei der Pressdruck größer 1,0 N/mm² ist, und
l) Entnehmen des Baukörpers aus dem Formbehältnis.

2. Verfahren nach Anspruch 1, **dadurch gekennzeichnet, dass**
das poröse partikuläre anorganische Füllstoffmaterial Blähton, Blähschiefer, z.B. expandiertes Glimmerschiefergranulat, Hohlglaskugeln, Hohlkeramikkugeln, Mineralblähglas, z.B. geschäumtes Blähglas und/oder Blähglasgranulate, Blähperlite, Blähglimmer, insbesondere geblähtes oder geschäumtes Vermiculit, Lavaschlacke, Tuff oder Bims oder deren beliebige Mischungen umfasst.

3. Verfahren nach Anspruch 1 oder 2, **dadurch gekennzeichnet, dass**
der Reaktivverdünner mindestens einen di- oder trifunktionellen Glycidylether auf Basis eines aliphatischen oder aromatischen Alkohols, insbesondere aliphatischen Alkohols, umfasst.

4. Verfahren nach einem der vorangehenden Ansprüche, **dadurch gekennzeichnet, dass** das poröse partikuläre anorganische Füllstoffmaterial eine mittlere Teilchengröße im Bereich von 0,3 mm bis 1,5 mm, besonders bevorzugt im Bereich von 0,5 mm bis 1,0 mm, oder eine mittlere Teilchengröße im Bereich von 0,5 mm bis 3,0 mm, besonders bevorzugt im Bereich von 1,0 mm bis 2,0 mm, oder eine mittlere Teilchengröße im Bereich von 1,5 mm bis 5,0 mm, besonders bevorzugt im Bereich von 2,0 mm bis 4,0 mm, aufweist.

5. Verfahren nach einem der vorangehenden Ansprüche, **dadurch gekennzeichnet, dass** das poröse partikuläre anorganische Füllstoffmaterial ausgewählt ist aus einer Korngruppe mit einer Kornobergrenze und einer Kornuntergrenze, wobei sich die Kornobergrenze von der Kornuntergrenze maximal um den Faktor 4, besonders bevorzugt maximal um den Faktor 3 und insbesondere maximal um den Faktor 2 unterscheidet.

6. Verfahren nach einem der vorangehenden Ansprüche, **dadurch gekennzeichnet, dass** der Pressdruck größer oder gleich 1,5 N/mm² und besonders bevorzugt größer 2,0 N/mm², ist.

7. Verfahren nach einem der vorangehenden Ansprüche, **dadurch gekennzeichnet, dass** die in dem Formbehältnis vorliegende Mischung, insbesondere während der Beaufschlagung mit dem Pressdruck, Temperaturen im Bereich von 60 bis 160° C, insbesondere im Bereich von 80 bis 140° C, aufweist.

8. Verfahren nach einem der vorangehenden Ansprüche, **dadurch gekennzeichnet, dass** der Schritt f) unterteilt ist in
f1) Vermischen von Epoxidharz mit Epoxidharz-Härter und gegebenenfalls Alkylphenol und/oder Hydrophobierungsmittel oder
Vermischen von Epoxidharz und Reaktivverdünner mit Epoxidharz-Härter und gegebenenfalls Alkylphenol und/oder Hydrophobierungsmittel und
f2) Vermischen der in Schritt f1) erhaltenen Mischung mit dem porösen partikulären anorganischen Füllstoffmaterial in der Weise, dass das Epoxidharz oder das Epoxidharz und der Reaktivverdünner nicht oder nicht vollständig ausgehärtet wird.

9. Verfahren nach einem der vorangehenden Ansprüche, **dadurch gekennzeichnet, dass** das Epoxidharz oder die gemäß Schritt f1) erhaltene Mischung vor und/oder bei der Mischung mit dem porösen partikulären anorganischen Füllstoffmaterial über eine Viskosität (bestimmt bei 25°C) nicht oberhalb von 550 mPas, bevorzugt nicht oberhalb von 400 mPas und besonders bevorzugt nicht oberhalb von 200 mPas verfügt.

10. Verfahren nach einem der vorangehenden Ansprüche, **dadurch gekennzeichnet, dass** das Epoxidharz im ausgehärteten Zustand über eine Glasübergangstemperatur von mindestens 60°C, bevorzugt von mindestens 70°C, besonders bevorzugt von mindestens 80 °C, verfügt.

11. Verfahren nach einem der vorangehenden Ansprüche, **dadurch gekennzeichnet, dass** der Gewichtsanteil an Epoxidharz und gegebenenfalls Epoxidharz-Härter oder an Epoxidharz und Reaktivverdünner und gegebenenfalls Epoxidharz-Härte, bezogen auf das Gesamtgewicht an dem porösen partikulären anorganischen Füllstoffmaterial und dem Epoxidharz sowie gegebenenfalls dem Epoxidharz-Härter bzw. bezogen auf das Gesamtgewicht an dem porösen partikulären anorganischen Füllstoffmaterial und dem Epoxidharz und dem Reaktivverdünner sowie gegebenenfalls dem Epoxidharz-Härter, unterhalb von 12 %, bevorzugt bei 8,0 % oder darunter und besonders bevorzugt bei 7,0 % oder darunter liegt.

12. Verfahren nach einem der vorangehenden Ansprüche, ferner umfassend den Schritt:
g) Behandeln des Formbehältnisses, insbesondere derjenigen Wandungen des Formbehältnisses, die in Kontakt mit der Mischung gemäß Schritt f) geraten, mit mindestens einem Trennmittel, insbesondere einem Wachs, und/oder
h) Einlegen einer ersten Lage in das Formbehältnis, bevor die Mischung gemäß Schritt f) in das Formbehältnis gemäß Schritt i) gegeben wird und/oder
j) Auflegen mindestens einer zweiten Lage auf die in das Formbehältnis gegebene Mischung, bevor die Beaufschlagung mit Druck gemäß Schritt k) erfolgt.

13. Verfahren nach einem der vorangehenden Ansprüche, **dadurch gekennzeichnet, dass** der Baukörper ein Bauprofil oder eine Bauplatte, insbesondere eine Putzträger- oder Sockelschutzplatte, darstellt.

14. Verfahren nach einem der Ansprüche 5 bis 13, **dadurch gekennzeichnet, dass** das poröse partikuläre anorganische Füllstoffmaterial ausgewählt ist aus einer der Korngruppen 0,1 bis 0,3 mm, 0,25 bis 0,5 mm, 0,5 bis 1,0 mm, 1,0 bis 2,0 mm, 2,0 bis 4,0 mm, 4,0 bis 8,0 mm oder 8,0 bis 16,0 mm oder aus beliebigen Mischungen dieser Korngruppenmaterialien.

15. Verfahren nach Anspruch 14, **dadurch gekennzeichnet, dass**
maximal 15 Gew.-%, bevorzugt maximal 10 Gew.-% und insbesondere maximal 5 Gew.-%, des partikulären Füllstoffmaterials mit einer Teilchengröße oberhalb der oberen Korngrenze und/oder dass maximal 20 Gew.-%, besonders bevorzugt maximal 15 Gew.-% und insbesondere maximal 10 Gew.-%, des partikulären Füllstoffmaterials mit einer Teilchengröße unterhalb der unteren Korngrenze vorliegen.

16. Baukörper, umfassend oder bestehend aus mittels Epoxidharz-Härter ausgehärtetem Epoxidharz als Bindemittelmatrix oder mittels Epoxidharz-Härter ausgehärtetem Epoxidharz und Reaktiwerdünner als Bindemittelmatrix
und darin eingebettet einer Vielzahl an Bruchstücken eines porösen partikulären anorganischen Füllstoffmaterials, wobei die porösen partikulären anorganischen Füllstoffmaterialen zumindest in Teilen zerstört in Form von Bruchstücken in der Bindemittelmatrix vorliegen und wobei das ausgehärtete Epoxidharz die beim Pressen entstandenen Bruchstücke der Füllstoffmaterialien einbindet,
wobei besagtes poröse partikuläre anorganische Füllstoffmaterial Blähton, Blähschiefer, z.B. expandiertes Glimmerschiefergranulat, Hohlglaskugeln, Hohlkeramikkugeln, Mineralblähglas, z.B. geschäumtes Blähglas und/oder Blähglasgranulate, Blähperlite, Blähglimmer, insbesondere geblähtes oder geschäumtes Vermiculit, Lavaschlacke, Tuff oder Bims oder deren beliebige Mischungen umfasst.

17. Baukörper nach Anspruch 16, ferner umfassend oder bestehend aus mindestens einem Hydrophobierungsmittel und/oder Alkylphenol und/oder porösem partikulären anorganischen Füllstoffmaterial.

18. Baukörper nach Anspruch 16 oder 17, **dadurch gekennzeichnet, dass** dieser enthält oder besteht aus
A1) ausgehärtetem Epoxidharz als Bindemittelmatrix, gebildet in Gegenwart von Epoxidharz und Epoxidharz-Härtern sowie gegebenenfalls von Alkylphenolen und/oder mindestens einem Hydrophobierungsmittel, oder
A3) der ausgehärteten Mischung aus Epoxidharz und Reaktivverdünner als Bindemittelmatrix, gebildet in Gegenwart von Epoxidharz, Reaktivverdünner und Epoxidharz-Härtern sowie gegebenenfalls von Alkylphenolen und/oder mindestens einem Hydrophobierungsmittel,
und
B) porösem partikulären anorganischen Füllstoffmaterial.

19. Baukörper nach einem der Ansprüche 16 bis 18, **dadurch gekennzeichnet, dass** die porösen partikulären anorganischen Füllstoffmaterialen sphärische Füllstoffmaterialien darstellen.

20. Baukörper nach einem der Ansprüche 16 bis 19, **dadurch gekennzeichnet, dass** das ausgehärtete Epoxidharz die beim Pressen entstandenen Bruchstücke der Füllstoffmaterialien miteinander verklebt.

21. Baukörper, insbesondere Bauplatte, nach einem der Ansprüche 16 bis 20, **gekennzeichnet durch** eine maximale Biegezugfestigkeit Fₘₐₓ, bestimmt gemäß DIN EN 1015 - Teil 11, Ausgabe 2007, von 1,5 N/mm² oder darüber und bevorzugt von 2,0 N/mm² oder darüber sowie besonders bevorzugt im Bereich von 2,3 N/mm² bis 2,8 N/mm², insbesondere von etwa 2,5 N/mm².

22. Baukörper, insbesondere Bauplatte, nach einem der Ansprüche 16 bis 21,
**gekennzeichnet durch**
eine erste Lage auf oder in einer ersten Seite der Bauplatte vorliegend und/oder eine zweite Lage auf oder in einer der ersten Seite gegenüberliegenden zweiten Seite der Bauplatte vorliegend, wobei die erste und/oder zweite Lage eine gewirkte, gewebte oder gestrickte Lage oder eine Vlieslage, insbesondere ein Armierungsgewebe, darstellt.

23. Baukörper nach einem der Ansprüche 16 bis 22, **gekennzeichnet durch** einen Brennwert kleiner oder gleich 3 MJ/kg (bestimmt nach DIN EN ISO 1716:2010-11).

## Claims

1. A method for manufacturing a component, comprising the steps of:
a) providing at least one epoxy resin and/or the constituents forming the epoxy resin, or providing at least one epoxy resin and/or the constituents forming the epoxy resin and at least one reactive diluent,
b) providing at least one epoxy resin hardening agent,
c) providing at least one porous particular inorganic filler material,
f) blending
epoxy resin or
epoxy resin and reactive diluent or
the constituents forming the epoxy resin or
the constituents forming the epoxy resin and reactive diluent
and
epoxy resin hardening agent and porous particular inorganic filler material in such a way that the epoxy resin or the epoxy resin and the reactive diluent is/are not or is/are not completely cured,
i) introducing the mixture obtained in step f) into a mould vessel,
k) applying heat and pressing pressure to the mixture present in the mould vessel,
wherein the pressing pressure is adjusted such that at least a part of the porous particular inorganic filler material in the mould vessel is reduced to fragments, and wherein this reduction in size takes place before and/or while the epoxy resin or the epoxy resin and the reactive diluent cure(s) due to the action of the epoxy resin hardening agent or due to the action of the epoxy resin hardening agent and heat, wherein the pressing pressure is greater than 1.0 N/mm², and
l) removing the component from the mould vessel.

2. The method according to Claim 1, **characterised in that**
the porous particular inorganic filler material comprises expanded clay, expanded shale, e.g. expanded mica schist granules, hollow glass balls, hollow ceramic balls, mineral expanded glass, e.g. foamed expanded glass and/or expanded glass granules, expanded pearlite, expanded mica, in particular expanded or foamed vermiculite, lava slag, tuff or pumice or any mixtures thereof.

3. The method according to Claim 1 or 2, **characterised in that** the reactive diluent comprises at least one difunctional or trifunctional glycidyl ether on the basis of an aliphatic or aromatic alcohol, in particular aliphatic alcohol.

4. The method according to any one of the preceding claims, **characterised in that** the porous particular inorganic filler material has an average particle size in the range of 0.3 mm to 1.5 mm, particularly preferably in the range of 0.5 mm to 1.0 mm, or an average particle size in the range of 0.5 mm to 3.0 mm, particularly preferably in the range of 1.0 mm to 2.0 mm, or an average particle size in the range of 1.5 mm to 5.0 mm, particularly preferably in the range of 2.0 mm to 4.0 mm.

5. The method according to any one of the preceding claims, **characterised in that** the porous particular inorganic filler material is selected from a grain size group having a grain size upper limit and a grain size lower limit, wherein the grain size upper limit differs from the grain size lower limit by a maximum of a factor of 4, particularly preferably by a maximum of a factor of 3 and, in particular, by a maximum of a factor of 2.

6. The method according to any one of the preceding claims, **characterised in that** the pressing pressure is greater or equal to 1.5 N/mm² and, particularly preferably, greater than 2.0 N/mm².

7. The method according to any one of the preceding claims, **characterised in that** the mixture present in the mould vessel has temperatures in the range of 60 to 160°C, in particular in the range of 80 to 140°C, in particular during the application of the pressing pressure.

8. The method according to any one of the preceding claims, **characterised in that** the step f) is divided into
f1) blending of epoxy resin with an epoxy resin hardening agent and, if applicable, an alkyl phenol and/or a hydrophobing agent, or
blending of epoxy resin and reactive diluent with an epoxy resin hardening agent and, if applicable, an alkyl phenol and/or a hydrophobing agent, and
f2) blending of the mixture obtained in step f1) with the porous particular inorganic filler material in such a way that the epoxy resin or the epoxy resin and the reactive diluent is/are not or is/are not completely cured.

9. The method according to any one of the preceding claims, **characterised in that** the epoxy resin or the mixture obtained according to step f1) before and/or during the mixing with the porous particular inorganic filler material has a viscosity (determined at 25°C) which is not above 550 mPas, which is preferably not above 400 mPas and, particularly preferably, which is not above 200 mPas.

10. The method according to any one of the preceding claims, **characterised in that** the epoxy resin in the cured condition has a glass transition temperature of at least 60°C, preferably of at least 70°C, particularly preferably of at least 80°C.

11. The method according to any one of the preceding claims, **characterised in that** the percentage by weight of epoxy resin and, if applicable, epoxy resin hardening agent or of epoxy resin and reactive diluent and, if applicable, epoxy resin hardening agent, based on the total weight of the porous particular inorganic filler material and the epoxy resin as well as, if applicable, the epoxy resin hardening agent or based on the total weight of the porous particular inorganic filler material and the epoxy resin and the reactive diluent as well as, if applicable, the epoxy resin hardening agent, is below 12%, preferably 8.0% or less and, particularly preferably, 7.0% or less.

12. The method according to any one of the preceding claims, further comprising the step of:
g) treating the mould vessel, in particular those walls of the mould vessel, which come into contact with the mixture according to step f), with at least one separating agent, in particular a wax, and/or
h) inserting a first layer into the mould vessel before the mixture according to step f) is added to the mould vessel according to step i), and/or
j) placing at least one second layer on the mixture added to the mould vessel before applying the pressure according to step k).

13. The method according to any one of the preceding claims, **characterised in that** the component constitutes a building profile or a building panel, in particular a plaster base or pedestal protecting plate.

14. The method according to any one of Claims 5 to 13, **characterised in that** the porous particular inorganic filler material is selected from one of the grain size groups 0.1 to 0.3 mm, 0.25 to 0.5 mm, 0.5 mm to 1.0 mm, 1.0 to 2.0 mm, 2.0 to 4.0 mm, 4.0 to 8.0 mm or 8.0 to 16.0 mm or from any mixtures of these grain size group materials.

15. The method according to Claim 14,
**characterised in that**
a maximum of 15 wt%, preferably a maximum of 10 wt% and, in particular, a maximum of 5 wt% of the particular filler material having a particle size above the grain size upper limit, and/or a maximum of 20 wt%, particularly preferably a maximum of 15 wt%, and, in particular, a maximum of 10 wt%, of the particular filler material having a particle size below the grain size lower limit are present.

16. A component, comprising or consisting of
epoxy resin cured by means of epoxy resin hardening agent as a binder matrix or epoxy resin cured by means of epoxy resin hardening agent and reactive diluent as a binder matrix and, embedded therein, a plurality of fragments of a porous particular inorganic filler material, wherein the porous particular inorganic filler materials are present in the binder matrix, broken up at least into parts in the form of fragments, and wherein the cured epoxy resin binds the fragments of the filler materials which are generated during pressing,
wherein said porous particular inorganic filler material comprises expanded clay,
expanded shale, e.g. expanded mica schist granules, hollow glass balls, hollow ceramic balls, mineral expanded glass, e.g. foamed expanded glass and/or expanded glass granules, expanded pearlite, expanded mica, in particular expanded or foamed vermiculite, lava slag, tuff or pumice or any mixtures thereof.

17. The component according to Claim 16, further comprising or consisting of
at least one hydrophobing agent and/or alkyl phenol and/or porous particular inorganic filler material.

18. The component according to Claim 16 or 17,
**characterised in that**
this contains or consists of
A1) cured epoxy resin as the binder matrix, formed in the presence of epoxy resin and epoxy resin hardening agents as well as, if applicable, alkyl phenols and/or at least one hydrophobing agent, or
A3) the cured mixture of epoxy resin and reactive diluent as the binder matrix, formed in the presence of epoxy resin, reactive diluent and epoxy resin hardening agents as well as, if applicable, alkyl phenols and/or at least one hydrophobing agent,
and
B) porous particular inorganic filler material.

19. The component according to any one of Claims 16 to 18,
**characterised in that**
the porous particular inorganic filler materials constitute spherical filler materials.

20. The component according to any one of Claims 16 to 19,
**characterised in that**
the cured epoxy resin bonds the fragments of the filler materials, which are generated during pressing, to one another.

21. A component, in particular a building panel, according to any one of Claims 16 to 20, **characterised by** a maximum bending tensile strength Fₘₐₓ, which is determined in accordance with DIN EN 1015 - Part 11, edition 2007, of 1.5 N/mm² or above and, preferably, of 2.0 N/mm² or above as well as, particularly preferably, in the range of 2.3 N/mm² to 2.8 N/mm², in particular of approximately 2.5 N/mm².

22. A component, in particular a building panel, according to any one of Claims 16 to 21, **characterised by**
a first layer present on or in a first side of the building panel and/or a second layer present on or in a second side of the building panel opposite the first side, wherein the first and/or second layer constitute(s) a machine-knitted, woven or knitted layer or a nonwoven layer, in particular a reinforcement fabric.

23. The component according to any one of Claims 16 to 22,
**characterised by** a fuel value of less than or equal to 3 MJ/kg (determined in accordance with DIN EN ISO 1716:2010-11).

## Revendications

1. Procédé pour la fabrication d'un corps de bâtiment, comprenant les étapes de :
a) mise à disposition d'au moins une résine époxyde et/ou des composants formant la résine époxyde ou
mise à disposition d'au moins une résine époxyde et/ou des composants formant la résine époxyde et d'au moins un diluant réactif.
b) mise à disposition d'au moins un durcisseur de résine époxyde,
c) mise à disposition d'au moins un matériau de remplissage anorganique particulaire poreux,
f) mélange :
de résine époxyde, ou
de résine époxyde et de diluant réactif ou
des composants formant la résine époxyde ou
des composants formant la résine époxyde et de diluant réactif
et
de durcisseur de résine époxyde et de matériau de remplissage anorganique particulaire poreux de telle sorte que la résine époxyde ou la résine époxyde et le diluant réactif ne sont pas durcis ou ne sont pas durcis complètement,
i) mise du mélange obtenu à l'étape f) dans un récipient à forme,
k) application de chaleur et de pression de compression au mélange se trouvant dans le récipient à forme,
la pression de compression étant réglée de telle sorte qu'au moins une partie du matériau de remplissage anorganique particulaire poreux est broyée en fragments dans le récipient à forme, et ce broyage ayant lieu avant et/ou pendant que la résine époxyde durcit, ou que la résine époxyde et le diluant réactif durcissent, par l'action du durcisseur de résine époxyde ou par l'action du durcisseur de résine époxyde et de chaleur, la pression de compression étant supérieure à 1,0 N/mm²,
et
l) retrait du corps de bâtiment du récipient à forme.

2. Procédé selon la revendication 1, **caractérisé en ce que** le matériau de remplissage anorganique particulaire poreux comprend de l'argile expansée, de l'ardoise expansée, par exemple du
granulat de micaschiste, des billes de verre creuses, des billes de céramique creuses, du verre expansé minéral, par exemple du verre expansé en mousse et/ou du granulat de verre expansé, de la perlite expansée, du mica expansé, en particulier de la vermiculite expansée ou en mousse, de la scorie de lave, du tuf ou de la pierre ponce, ou leurs mélanges quelconques.

3. Procédé selon la revendication 1 ou 2, **caractérisé en ce que** le diluant réactif comprend au moins un éther glycidylique di- ou trifonctionnel à base d'un alcool aliphatique ou aromatique, en particulier d'un alcool aliphatique.

4. Procédé selon l'une quelconque des revendications précédentes, **caractérisé en ce que** le matériau de remplissage anorganique particulaire poreux présente une taille de particules moyenne dans la plage de 0,3 mm à 1,5 mm, en particulier de préférence dans la plage de 0,5 mm à 1,0 mm, ou une taille de particules moyenne dans la plage de 0,5 mm à 3,0 mm, en particulier de préférence dans la plage de 1,0 mm à 2,0 mm, ou une taille de particules moyenne dans la plage de 1,5 mm à 5,0 mm, en particulier de préférence dans la plage de 2,0 mm à 4,0 mm.

5. Procédé selon l'une quelconque des revendications précédentes, **caractérisé en ce que** le matériau de remplissage anorganique particulaire poreux est sélectionné parmi un groupe de granulats avec une limite granulométrique supérieure et une limite granulométrique inférieure, la limite granulométrique supérieure différant de la limite granulométrique inférieure au maximum du facteur 4, en particulier de préférence au maximum du facteur 3, et en particulier au maximum du facteur 2.

6. Procédé selon l'une quelconque des revendications précédentes, **caractérisé en ce que** la pression de compression est supérieure ou égale à 1,5 N/mm², et en particulier de préférence supérieure à 2,0 N/mm².

7. Procédé selon l'une quelconque des revendications précédentes, **caractérisé en ce que** le mélange se trouvant dans le récipient à forme présente des températures dans la plage de 60 °C à 160 °C, en particulier dans la plage de 80 °C à 140 °C, en particulier pendant l'application de la pression de compression.

8. Procédé selon l'une quelconque des revendications précédentes, **caractérisé en ce que** l'étape f) se divise en :
f1) mélange de résine époxyde avec un durcisseur de résine époxyde et, le cas échéant, un alkylphénol et/ou un agent rendant hydrophobe ou
mélange de résine époxyde et de diluant réactif avec un durcisseur de résine époxyde et, le cas échéant, avec un alkylphénol et/ou un agent rendant
hydrophobe et
f2) mélange du mélange contenu à l'étape f1) avec le matériau de remplissage anorganique particulaire poreux de telle sorte que la résine époxyde ou la résine époxyde et le diluant réactif ne sont pas durcis ou ne sont pas complètement durcis.

9. Procédé selon l'une quelconque des revendications précédentes, **caractérisé en ce que** la résine époxyde ou le mélange obtenu conformément à l'étape f1), avant et/ou lors du mélange avec le matériau de remplissage anorganique particulaire poreux, dispose d'une viscosité (déterminée à 25 °C) ne dépassant pas 550 mPas, de préférence ne dépassant pas 400 mPas et en particulier de préférence ne dépassant pas 200 mPas.

10. Procédé selon l'une quelconque des revendications précédentes, **caractérisé en ce que** la résine époxyde en état durci dispose d'une température de transition vitreuse d'au moins 60 °C, de préférence d'au moins 70 °C, en particulier de préférence d'au moins 80 °C

11. Procédé selon l'une quelconque des revendications précédentes, **caractérisé en ce que** la proportion en poids de résine époxyde et, le cas échéant, de durcisseur de résine époxyde ou de résine époxyde et de diluant réactif et, le cas échéant, de durcisseur de résine époxyde, rapporté au poids total du matériau de remplissage anorganique particulaire poreux et de la résine époxyde, ainsi que, le cas échéant, du durcisseur de résine époxyde, ou rapporté au poids total du matériau de remplissage anorganique particulaire poreux et de la résine époxyde et du diluant réactif, ainsi que, le cas échéant, du durcisseur de résine époxyde, est inférieur à 12 %, de préférence de 8,0 % ou moins, et en particulier de préférence de 7,0 % ou moins.

12. Procédé selon l'une quelconque des revendications précédentes, comprenant en outre l'étape :
g) traitement du récipient à forme, en particulier des parois du récipient à forme qui entrent en contact avec le mélange conformément à l'étape f), avec au moins un agent de séparation, en particulier une cire, et/ou
h) pose d'une première couche dans le récipient à forme, avant que le mélange conforme à l'étape f) soit mis dans le récipient à forme conformément à l'étape i) et/ou
j) pose d'au moins une deuxième couche sur le mélange mis dans le récipient à forme, avant que l'application de pression conformément à l'étape k) soit effectuée.

13. Procédé selon l'une quelconque des revendications précédentes, **caractérisé en ce que** le corps de bâtiment représente un profil de construction ou un panneau de construction, en particulier un panneau de support d'enduit ou un panneau de protection de socle.

14. Procédé selon l'une quelconque des revendications 5 à 13, **caractérisé en ce que** le matériau de remplissage anorganique particulaire poreux est sélectionné parmi un des groupes de granulats de 0,1 à 0,3 mm, de 0,25 à 0,5 mm, de 0,5 mm à 1,0 mm, de 1,0 à 2,0 mm, de 2,0 à 4,0 mm, de 4,0 à 8,0 mm ou de 8,0 à 16,0 mm, ou parmi des mélanges quelconques de ces matériaux de groupes de granulats.

15. Procédé selon la revendication 14, **caractérisé en ce qu'**au maximum 15 % massique, de préférence au maximum 10 % massique et en particulier au maximum 5 % massique du matériau de remplissage particulaire, avec une taille de particule supérieure à la limite de grain supérieure, et/ou **en ce qu'**au maximum 20 % massique, en particulier de préférence au maximum 15 % massique et en particulier au maximum 10 % massique du matériau de remplissage particulaire avec une taille de particule inférieure à la limite de grain inférieure sont présents.

16. Corps de bâtiment, comprenant de la, ou se composant de, résine époxyde durcie au moyen de durcisseur de résine époxyde comme matrice liante, ou résine époxyde et diluant réactif durcis au moyen de durcisseur de résine époxyde comme matrice liante, et d'une multiplicité de fragments d'un matériau de remplissage anorganique particulaire poreux y étant intégrés, les matériaux de remplissage anorganiques particulaires poreux étant présents au moins partiellement broyés sous la forme de fragments dans la matrice liante, et la résine époxyde durcie intégrant les fragments des matériaux de remplissage générés lors de la compression.
le susdit matériau de remplissage anorganique particulaire poreux comprenant de l'argile expansée, de l'ardoise expansée, par exemple du granulat de micaschiste, des billes de verre creuses, des billes de céramique creuses, du verre expansé minéral, par exemple du verre expansé en mousse et/ou du granulat de verre expansé, de la perlite expansée, du mica expansé, en particulier de la vermiculite expansée ou en mousse, de la scorie de lave, du tuf ou de la pierre ponce, ou leurs mélanges quelconques.

17. Corps de bâtiment selon la revendication 16, comprenant en outre ou se composant d'au moins un agent rendant hydrophobe et/ou d'un alkylphénol et/ou d'un matériau de remplissage anorganique particulaire poreux.

18. Corps de bâtiment selon la revendication 16 ou 17,
**caractérisé en ce que** celui-ci comprend ou se compose de
A1) résine époxyde durcie comme matrice liante, formée en présence de résine époxyde et de durcisseurs de résine époxyde, ainsi que, le cas échéant, d'alkylphénols et/ou d'au moins un agent rendant hydrophobe, ou
A3) mélange durci de résine époxyde et de diluant réactif comme matrice liante, formé en présence de résine époxyde, de diluant réactif et de durcisseurs de résine époxyde, ainsi que, le cas échéant, d'alkylphénols et/ou d'au moins un agent rendant hydrophobe,
et
B) matériau de remplissage anorganique particulaire poreux.

19. Corps de bâtiment selon l'une quelconque des revendications 16 à 18,
**caractérisé en ce que** les matériaux de remplissage anorganiques particulaires poreux présentent des matériaux de remplissage sphériques.

20. Corps de bâtiment selon l'une quelconque des revendications 16 à 19,
**caractérisé en ce que** la résine époxyde durcie colle entre eux des fragments des matériaux de remplissage générés lors de la compression.

21. Corps de bâtiment, en particulier panneau de construction, selon l'une des revendications 16 à 20,
**caractérisé par** une résistance à la traction par flexion Fₘₐₓ maximale déterminée conformément à DIN EN 1015 - section 11, édition 2007, de 1,5 N/mm² ou plus, et de préférence de 2,0 N/mm² ou plus, ainsi qu'en particulier de préférence dans la plage de de 2,3 N/mm² à 2,8 N/mm², en particulier d'environ 2,5 N/mm².

22. Corps de bâtiment, en particulier panneau de construction, selon l'une quelconque des revendications 16 à 21,
**caractérisé par** une première couche, se trouvant sur ou dans un premier côté du panneau de construction, et/ou une deuxième couche, se trouvant sur ou dans un deuxième côté du panneau de construction opposé au premier côté, la première et/ou la deuxième couche représentant une couche tressée, tissée ou tricotée ou une couche de non-tissé, en particulier un treillis d'armature.

23. Corps de bâtiment selon l'une quelconque des revendications 16 à 22,
**caractérisé par** un pouvoir calorifique inférieur ou égal à 3 MJ/kg (déterminé par DIN EN ISO 1716:2010-11).
